# EUROPÄISCHE PATENTSCHRIFT

(11) **EP 1 089 002 B1**
(45) Veröffentlichungstag und Bekanntmachung des Hinweises auf die Patenterteilung: **30.03.2005**
(21) Anmeldenummer: 00120793.5
(22) Anmeldetag: 23.09.2000
(51) Int. Cl.: F16C 33/10

(54) **Sintergleitlager für Motoren und Getriebe**
Sintered plain bearing for engines and gears
Palier lisse fritte pour moteurs et engrenages

(30) Priorität: 02.10.1999 DE 19947462
(43) Veröffentlichungstag der Anmeldung: 04.04.2001
(73) Patentinhaber: Karl Simon GmbH & Co. KG, 78733 Aichhalden (DE)
(72) Erfinder: Kurz, Guido, 86853 Langerring (DE); Broghammer, Thomas, 78733 Aichhalden (DE)
(74) Vertreter: Fleck, Hermann-Josef, Dr.-Ing.

(56) Entgegenhaltungen:
- CH-A- 227 650
- US-A- 4 576 488
- US-A- 5 704 718
- US-A- 5 810 479
- US-A- 5 932 946

## Beschreibung

Die Erfindung betrifft ein Sintergleitlager für Motoren und Getriebe mit einer von einer Lagerbohrung gebildeten und mit Schmierstoff aus Schmierstoffdepots im Lager beaufschlagbaren Lauffläche, bei dem die Lagerbohrung über den Umfang verteilt abwechselnd hoch verdichtete, kleinporige Laufflächen und von Stirnseite zu Stirnseite des Lagers niedrig verdichtete offenporige Schmierstoffdepots aufweist.

Ein derartiges Sintergleitlager ist aus der DE-Z "Tribologie + Schmierungstechnik", 45. Jahrgang, 1/1988, Seiten 47/48 bekannt. Die Schmierstoffdepots werden als im Querschnitt dreieckförmige Nuten in die Lagerbohrung des Sinterkörpers eingebracht, während die Laufflächen zwischen den Nuten durch Kalibrieren verdichtet werden. Diese Schmierstoffdepots können wohl Schmierstoff aufnehmen, der beim Betrieb aus dem Sinterlager austritt, d.h. aus den nicht hoch verdichteten Bereichen desselben verdrängt wird. Da die Nuten axial gerichtet und in größerem Abstand zueinander angeordnet sind, sowie eine große Breite aufweisen, ist die Schmierwirkung nicht optimal auf die gesamte Lauffläche der Lagerbohrung verteilt und besonders in den Anlaufphasen des Betriebes nicht ausreichend.

Dies gilt sinngemäß auch für ein Sintergleitlager nach der US 5,704,718, bei dem die Schmierstoffdepots große U-förmige Nuten bilden, deren Nutgrund gegenüber den Laufflächen mit größerem Durchmesser abgesetzt sind. Der im Bereich dieser Nuten im Stillstand gespeicherte Schmierstoff kann in den Anlaufphasen des Betriebes nicht wirksam zur Schmierung beitragen. Die Schmierstoffdepots müssen sich erst mit Schmierstoff füllen, bevor sie wirkungsvoll an der Schmierung der Welle beteiligt sind.

Es ist Aufgabe der Erfindung, bei einem Sintergleitlager der eingangs erwähnten Art die Schmierwirkung der Schmierstoffdepots so zu verbessern, dass unabhängig von der Einbaulage des Lagers zumindest ein Teilbereich der Umfangsfläche der Welle stets mit einem Schmierstoffdepot in Verbindung steht.

Diese Aufgabe wird nach der Erfindung dadurch gelöst, dass die Schmierstoffdepots als Rillenstrukturen mit mindestens zwei Längsrillen gebildet sind, die von Stirnseite zu Stirnseite des Lagers in spitzem Winkel zur Mittelachse der Lagerbohrung geneigt sind.

Durch die geneigte Ausrichtung der Rillenstrukturen können sich die Streifen von Laufflächen zwischen den Stirnseiten des Lagers mit ihren Enden aneinander reihen, so dass eine in die Lagerbohrung eingeführte Welle stets zumindest teilweise mit einem Schmierstoffdepot in Verbindung steht und dies über den gesamten Umfang der Welle. Damit wird die Schmierwirkung der Schmierstoffdepots wesentlich verbessert und das Sintergleitlager wird lageunabhängig zur Welle ausreichend geschmiert.

Ist nach einer Ausgestaltung vorgesehen, dass die Längsrillen der Rillenstrukturen im Bereich der Stirnseiten geschlossen sind, dann kann der von den Längsrillen der Rillenstrukturen aufgenommene Schmierstoff nicht aus dem Lager austreten und steht voll zur Schmierung der Welle zur Verfügung.

Die Längsrillen können nach einer einfachen Ausgestaltung durch verformte Teile des Sinterlagers verschlossen sein.

Nach einer weiteren Ausgestaltung kann die Verteilung des Schmierstoffes auf die gesamte Umfangsfläche der Welle dadurch noch verbessert werden, dass die Enden benachbarter Rillenstrukturen sich an den beiden Stirnseiten mindestens teilweise überlappen.

Das Einbringen der Rillenstrukturen in die Lagerbohrung wird dadurch erleichtert, dass die Rillenstrukturen in gleichem Abstand und damit in gleichem Winkelbereich zueinander angeordnet sind, da die Winkelstellung des Einbringwerkzeuges beibehalten werden kann.

Die Rillenstrukturen sind dadurch vervollständigt, dass die Längsrillen durch Rillenkuppen voneinander getrennt sind und dass die Rillenkuppen mit der in die Lagerbohrung eingeführten Welle nichttragend, zur Schmierstoffübergabe jedoch zumindest teilweise in Kontakt stehen. Damit wird über die porösen Rillenkuppen auch die Schmierung der Welle in den Anfangsphasen des Betriebes verbessert.

Für die Dimensionierung der Rillenstrukturen hat sich eine Ausgestaltung als vorteilhaft erwiesen, die dadurch gekennzeichnet ist, dass die Längsrillen eine Tiefe von bis zu 0,5 mm und eine Breite im Bereich der Lagerbohrung von 0,30 bis 0,50 mm aufweisen, wobei die Radien der Längsrillen mindestens 0,05 mm betragen, und dass die Rillenkuppen spiegelbildlich gleiche Abmessungen aufweisen.

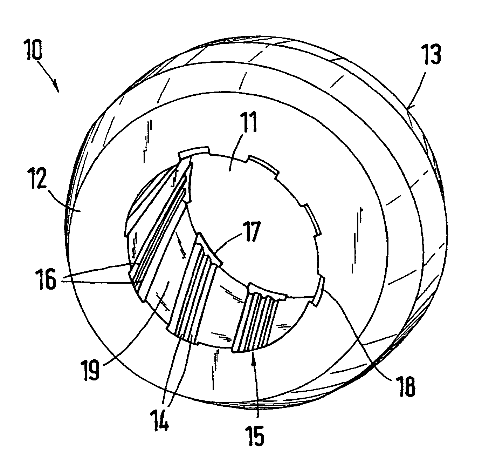

Die Erfindung wird anhand eines in der Zeichnung in Perspektive dargestellten Ausführungsbeispiels näher erläutert.

Ein hülsenförmiges Sintergleitlager 10 mit den beiden Stirnseiten 12 und 13 hat eine Lagerbohrung 11, in der sich Rillenstrukturen 15 mit Längsrillen 14 und Rillenkuppen 16 mit Streifen von Laufflächen 19 abwechseln. Die Rillenstrukturen 15 mit den Längsrillen 14 und Rillenkuppen 16 sind niedrig verdichtet und daher offenporig, so dass sie als Speicher für Schmierstoff wirken. Die Streifen von Laufflächen 19 sind durch Kalibrierung hoch verdichtet und kleinporig, so dass sie für die Welle verschleißfeste Gleitflächen bilden, ihre Schmierstoff-Speicherfähigkeit ist jedoch sehr gering.

Die Rillenstrukturen 15 sind aus mindestens zwei Längsrillen 14 - im Ausführungsbeispiel 3 - gebildet, die durch Rillenkuppen 16 voneinander getrennt sind. Die Rillenkuppen 16 sind spiegelbildlich zu den Längsrillen 14 ausgebildet und entsprechend gleich dimensioniert. So kann eine Längsrille 14 eine Tiefe von bis zu 0,50 mm und eine Breite von 0,30 bis 0,50 mm aufweisen. Die Radien der Längsrillen 14 und der Rillenkuppen 16 können mindestens 0,05 mm betragen. Die Rillenkuppen 16 sind niedrig verdichtet und stehen nichttragend mit der Welle in Kontakt, um auch in den Anlaufphasen des Betriebes eine Schmierwirkung für die Welle zu erreichen.

Die Rillenstrukturen 15 verlaufen nicht parallel zur Mittelachse der Lagerbohrung 11, sondern sind zu dieser im spitzen Winkel geneigt. Dabei sind benachbarte Rillenstrukturen 15 an beiden Stirnseiten 12 und 13 mit ihren gegenüberliegenden Enden aneinander gereiht. Die Neigung der Rillenstrukturen 15 kann auch so gewählt werden, dass benachbarte Rillenstrukturen 15 mit den gegenüberliegenden Enden auf den Stirnseiten 12 und 13 sich zumindest teilweise überlappen. Die in die Lagerbohrung 11 eingeführte Welle steht daher mit einem Teilbereich seiner Umfangsfläche stets mit einer Rillenstruktur 15 in Kontakt und damit ist die Schmierung stets über den gesamten Umfang der Welle - zumindest mit einem Teil desselben - ausgedehnt. Die Längsrillen 14 sind auf beiden Stirnseiten 12 und 13 des Sintergleitlagers 10 verschlossen, wie die verformten Teile 17 und 18 der Stirnseiten 12 und 13 zeigen. Dies kann durch einen Stauchvorgang nach dem Einbringen der Längsrillen 14 erreicht werden.

Die Außenkanten der Stirnseiten 12 und 13 des Sintergleitlagers 10 können mit einer Phase abgeschrägt sein.

## Patentansprüche

1. Sintergleitlager für Motoren und Getriebe mit einer von einer Lagerbohrung gebildeten und mit Schmierstoff aus Schmierstoffdepots im Lager beaufschlagbaren Lauffläche, bei dem die Lagerbohrung über den Umfang verteilt abwechselnd hoch verdichtete, kleinporige Laufflächen und von Stirnseite zu Stirnseite des Lagers niedrig verdichtete offenporige Schmierstoffdepots aufweist,
**dadurch gekennzeichnet,**
**dass** die Schmierstoffdepots als Rillenstrukturen (15) mit mindestens zwei Längsrillen (14) gebildet sind, die von Stirnseite (12) zu Stirnseite (13) des Lagers (10) in spitzem Winkel zur Mittelachse der Lagerbohrung (11) geneigt sind.

2. Sintergleitlager nach Anspruch 1,
**dadurch gekennzeichnet,**
**dass** die Längsrillen (14) der Rillenstrukturen (15) im Bereich der Stirnseiten (12, 13) geschlossen sind (17, 18).

3. Sintergleitlager nach Anspruch 2,
**dadurch gekennzeichnet,**
**dass** die Längsrillen (14) durch verformte Teile (17, 18) des Lagers (10) verschlossen sind.

4. Sintergleitlager nach einem der Ansprüche 1 bis 3,
**dadurch gekennzeichnet,**
**dass** die Enden benachbarter Rillenstrukturen (15) sich an den beiden Stirnseiten (12, 13) mindestens teilweise überlappen.

5. Sintergleitlager nach einem der Ansprüche 1 bis 4,
**dadurch gekennzeichnet,**
**dass** die Rillenstrukturen (15) in gleichem Abstand und damit in gleichem Winkelbereich zueinander angeordnet sind.

6. Sintergleitlager nach einem der Ansprüche 1 bis 5,
**dadurch gekennzeichnet,**
**dass** die Längsrillen (14) durch Rillenkuppen (16) voneinander getrennt sind und
**dass** die Rillenkuppen (16) mit der in die Lagerbohrung (11) eingeführten Welle nichttragend, zur Schmierstoffübergabe jedoch zumindest teilweise in Kontakt stehen.

7. Sintergleitlager nach einem der Ansprüche 1 bis 6,
**dadurch gekennzeichnet,**
**dass** die Längsrillen (14) eine Tiefe von bis zu 0,5 mm und eine Breite im Bereich der Lagerbohrung (11) von 0,30 bis 0,50 mm aufweisen, wobei die Radien der Längsrillen mindestens 0,05 mm betragen, und
**dass** die Rillenkuppen (16) spiegelbildlich gleiche Abmessungen aufweisen.

## Claims

1. Sintered plain bearing for engines and gears, having a raceway which is formed by a bearing bore and can be acted upon by lubricant from lubricant stores in the bearing, in which the bearing bore has, distributed over the periphery, alternately highly compressed small-pore raceways and, from end face to end face of the bearing, lowly compressed open-pore lubricant stores, **characterized in that** the lubricant stores are formed as grooved structures (15) having at least two longitudinal grooves (14), which are inclined from end face (12) to end face (13) of the bearing (10) at an acute angle to the centre axis of the bearing bore (11).

2. Sintered plain bearing according to Claim 1, **characterized in that** the longitudinal grooves (14) of the grooved structures (15) are closed (17, 18) in the region of the end faces (12, 13).

3. Sintered plain bearing according to Claim 2, **characterized in that** the longitudinal grooves (14) are sealed by deformed parts (17, 18) of the bearing (10).

4. Sintered plain bearing according to one of Claims 1 to 3, **characterized in that** the ends of adjacent grooved structures (15) at least partially overlap on the two end faces (12, 13).

5. Sintered plain bearing according to one of Claims 1 to 4, **characterized in that** the grooved structures (15) are disposed at an equal distance apart and thus in the same angular range to one another.

6. Sintered plain bearing according to one of Claims 1 to 5, **characterized in that** the longitudinal grooves (14) are mutually separated by groove ridges (16) and **in that** the groove ridges (16) are at least partially in contact, in a non-supporting manner, yet so as to deliver lubricant, with the shaft introduced into the bearing bore (11).

7. Sintered plain bearing according to one of Claims 1 to 6, **characterized in that** the longitudinal grooves (14) have a depth of up to 0.5 mm and a width in the region of the bearing bore (11) of 0.30 to 0.50 mm, the radii of the longitudinal grooves measuring at least 0.05 mm, and **in that** the groove ridges (16) have the same dimensions in mirror image.

## Revendications

1. Palier lisse fritté pour moteurs et engrenages, comprenant une surface de roulement formée par un alésage de palier et pouvant être sollicitée avec du lubrifiant constitué de dépôts de lubrifiant dans le palier, dans lequel l'alésage de palier présente, en alternance sur la périphérie, des surfaces de roulement à pores étroits, fortement comprimées et des dépôts de lubrifiant à pores ouverts, faiblement comprimés, s'étendant d'un côté frontal à l'autre du palier,
**caractérisé en ce que**
les dépôts de lubrifiant sont réalisés sous forme de structures rainurées (15) avec au moins deux rainures longitudinales (14), qui sont inclinées d'un côté frontal (12) à l'autre (13) du palier (10) suivant un angle aigu par rapport à l'axe médian de l'alésage du palier (11).

2. Palier lisse fritté selon la revendication 1,
**caractérisé en ce que**
les rainures longitudinales (14) des structures rainurées (15) sont fermées (17, 18) dans la région des côtés frontaux (12, 13).

3. Palier lisse fritté selon la revendication 2,
**caractérisé en ce que**
les rainures longitudinales (14) sont fermées par des pièces façonnées (17, 18) du palier (10).

4. Palier lisse fritté selon l'une quelconque des revendications 1 à 3,
**caractérisé en ce que**
les extrémités de structures rainurées voisines (15) se chevauchent au moins partiellement au niveau des deux côtés frontaux (12, 13).

5. Palier lisse fritté selon l'une quelconque des revendications 1 à 4,
**caractérisé en ce que**
les structures rainurées (15) sont disposées à égale distance et de ce fait suivant la même plage angulaire les unes par rapport aux autres.

6. Palier lisse fritté selon l'une quelconque des revendications 1 à 5,
**caractérisé en ce que**
les rainures longitudinales (14) sont séparées les unes des autres par des crêtes de rainures (16) et **en ce que** les crêtes de rainures (16) sont toutefois au moins partiellement en contact non-porteur avec l'arbre introduit dans l'alésage du palier (11), en vue du transfert de lubrifiant.

7. Palier lisse fritté selon l'une quelconque des revendications 1 à 6,
**caractérisé en ce que**
les rainures longitudinales (14) présentent une profondeur allant jusqu'à 0,5 mm et une largeur dans la région de l'alésage de palier (11) de 0,30 à 0,50 mm, les rayons des rainures longitudinales valant au moins 0,05 mm, et les crêtes des rainures (16) présentant des dimensions identiques inversées.
